# EUROPÄISCHE PATENTSCHRIFT

(11) **EP 1 276 370 B1**
(45) Veröffentlichungstag und Bekanntmachung des Hinweises auf die Patenterteilung: **04.08.2004**
(21) Anmeldenummer: 02730184.5
(22) Anmeldetag: 20.04.2002
(51) Int. Cl.: A01K 13/00

(54) **GAMASCHE ZUM SCHUTZ EINES BEINES EINES PFERDS, INSBESONDERE ZUM SCHUTZ VON RÖHRENBEIN UND FESSEL VON SPRINGPFERDEN**
BOOT FOR PROTECTING THE LEG OF A HORSE, ESPECIALLY FOR PROTECTING THE CANNON-BONE AND PASTERN OF JUMPERS
GUETRE DESTINEE A PROTEGER LA JAMBE D'UN CHEVAL, EN PARTICULIER A PROTEGER LE CANON ET LE PATURON D'UN CHEVAL D'OBSTACLE

(30) Priorität: 20.04.2001 DE 20106800 U
(43) Veröffentlichungstag der Anmeldung: 22.01.2003
(73) Patentinhaber: Pikeur Reitmoden Brinkmann GmbH & Co.KG, 33824 Werther (DE)
(72) Erfinder: JOHANNSMANN, Hans-Georg, 32049 Herford (DE); BEERBAUM, Ludger, 48477 Riesenbeck (DE)
(74) Vertreter: Simons, Johannes, Dipl.-Ing.
(86) Internationale Anmeldenummer: PCT/EP2002/004402
(87) Internationale Veröffentlichungsnummer: WO 2002/085107

(56) Entgegenhaltungen:
- EP-A- 0 727 140
- DE-U- 20 020 233
- FR-A- 610 816
- US-A- 3 405 506
- DY'ON SPRL: '27528-02 Protège-tendon' RECUEIL DES DESSINS OU MODELES BENELUX Bd. 23, Nr. 2, 21 Februar 1997, NL, Seiten 233 - 234

## Beschreibung

Die Erfindung betrifft eine Gamasche zum Schutz eines Beines eines Pferds, insbesondere zum Schutz von Sehnen, Bänder, Gleichbein und Fesselgelenk der hinteren Partie der Vorderbeine von Springpferden, mit einer Außenschale aus einem formsteifen Material, die einen der Rückseite des jeweiligen Beins zugeordneten, sich längs des Beins erstreckenden Mittelabschnitt aufweist. Üblicherweise schließt sich dabei an die Seiten des Mittelabschnitts jeweils ein Seitenabschnitt an. Vgl. z.B. die Druckschrift US-A-3 405 506.

Derartige Gamaschen werden insbesondere an die Vorderbeine von Springpferden im Bereich des Übergangs vom Fesselgelenk zum Röhrenknochen angelegt, um die in diesem Bereich über die Rückseite der Beine verlaufenden Sehnen und Bänder sowie die Knochen des Fesselgelenks vor Verletzungen zu schützen. Zu derartigen Verletzungen kann es, wenn keine Gamaschen angelegt werden, beispielsweise durch Aneinanderstoßen der Pferdebeine durch Hineinspringen der Hinterhufe in der Bewegung oder durch herabfallende, an das Bein stoßende Hindernisstangen kommen.

Um einen ausreichenden Schutz ohne eine allzu große Einschränkung der Bewegungsfreiheit zu gewährleisten, ist die Länge der Gamaschen in der Regel so bemessen, daß sie im am Pferd angelegten Zustand ausgehend vom Fesselgelenk etwa die halbe Länge des Röhrenknochens abdecken. Eine noch höhere Abdeckung erweist sich als problematisch, weil dann die Beweglichkeit insbesondere der auf der Rückseite der Beine verlaufenden Sehnen und Muskeln zu stark behindert wird.

Letzteres Problem tritt auch dann auf, wenn nicht exakt an die Größe des jeweiligen Pferdes und seine Gliedmaßen angepaßte Gamaschen verwendet werden. In diesem Fall kann es zu für das Pferd schmerzhaften Scheuerstellen in den Bereichen kommen, in denen die Ränder der Gamaschen Körperteilen berühren, die sich während des Springens oder Laufens relativ zur Gamasche bewegen. In der Praxis besteht diese Gefahr insbesondere in dem Bereich, in dem der obere Rand der Gamasche auf den für das Beugen des Kronbeins vorhandenen Muskeln und Sehnen anliegen.

Es ist versucht worden, die voranstehend erläuterten Probleme dadurch zu beseitigen, daß die Innenseite und der äußere Randbereich der harten Außenschale mit weichen Futtermaterialien, wie Neoprene, gepolstert wird. Diese Maßnahmen führten jedoch nicht zu dem gewünschten Resultat, da auch durch stark gepolsterte, im übrigen aber im Hinblick auf die Schutzfunktion notwendigerweise formsteife Gamaschen die Bewegungsfreiheit des Pferdes nach wie vor eingeschränkt ist.

Die Aufgabe der Erfindung besteht darin, eine Gamasche zu schaffen, die einen erhöhten Tragekomfort und eine größtmögliche Bewegungsfreiheit bei gleichzeitig optimalem Schutz des jeweiligen Beins besitzt.

Diese Aufgabe wird bei einer Gamasche der eingangs angegebenen Art erfindungsgemäß dadurch gelöst, daß der Mittelabschnitt der Außenschale in seinem im am Bein des Pferdes befestigten Zustand oberen Randbereich eine Ausnehmung aufweist, die mit einem nachgiebigen Polstermaterial gefüllt ist.

Bei einer erfindungsgemäßen Gamasche ist der Bereich der aus einem harten Material bestehenden Außenschale ausgespart, in dem die Beweglichkeit des Beins am stärksten durch eine unnachgiebige Schutzabdeckung behindert würde. Dabei liegt der Erfindung die Erkenntnis zugrunde, daß es für einen ausreichenden Schutz des Beins nicht zwangsläufig notwendig ist, den gesamten im Hinblick auf Verletzungen kritischen rückwärtigen Bereich des Pferdebeins mit einem harten Schutzmaterial abzudecken, solange die Seiten des Beins über die vollständige Länge des betreffenden Bereichs geschützt sind und eine ausreichende Polsterung im Bereich der Ausnehmung nach wie vor vorhanden ist. Diese weiche, nachgiebige Polsterung ermöglicht die freie Bewegung der darunterliegenden Muskeln und Sehnen. Scheuerstellen oder andere auf Dauer bei Berührung von bewegten Körperteilen mit einem festen Gegenstand eintretende Folgen werden so vermieden. Eine erfindungsgemäße Gamasche zeichnet sich daher durch einen optimalen Schutz bei gleichzeitig hohem Tragekomfort und größtmöglicher Beweglichkeit des Pferdes aus.

weist die Gamasche in üblicher Weise eine Außenschale auf, bei der an mindestens eine der Seiten des Mittelabschnitts ein Seitenabschnitt angeschlossen ist, so ist eine praxisgerechte Ausgestaltung der Erfindung dadurch gekennzeichnet, daß sich die Ausnehmung bis in die Seitenabschnitte der Außenschale erstreckt. Bei dieser Variante ist sichergestellt, daß es auch im Bereich des Übergangs vom Mittelabschnitt zu den Seitenabschnitten nicht zu unnötigen Belastungen kommt.

Praktische und theoretische Untersuchungen haben ergeben, daß es günstig ist, wenn die Ausnehmung einen im wesentlichen quer zur Längsachse der Gamasche sich erstreckenden mittleren Randabschnitt aufweist, der über seitliche, sich längs der Gamasche erstreckende Randabschnitte mit dem oberen Rand der Außenschale verbunden ist. Der betreffende mittlere Randabschnitt sollte dabei einen in Richtung des unteren Randes der Außenschale gewölbten Verlauf aufweisen, um so der natürlichen Form des Pferdebeins zu folgen. Dabei kann die Verletzungsgefahr weiter gemindert werden, wenn der Übergang von den seitlichen Randabschnitten zu dem mittleren Randabschnitt abgerundet ausgeführt ist. Der im Hinblick auf eine Minimierung der Verletzungsgefahr und Erhöhung des Tragekomforts günstige weiche Übergang der Randabschnitte kann zudem dadurch unterstützt werden, daß die seitlichen Randabschnitte schräg von dem mittleren Randabschnitt weggeführt sind.

Eine optimale Abstimmung von Schutz und Tragekomfort einer erfindungsgemäßen Gamasche läßt sich erreichen, wenn die in Richtung der Längserstreckung der Gamasche gemessene Höhe der Ausnehmung einem Siebtel bis einem Neuntel der Gesamthöhe der Außensschale entspricht. Bei einer derartigen Bemessung der Höhe, über die sich die Ausnehmung erstreckt, ist eine gute Beweglichkeit bei gleichzeitig sicherer Abschirmung der empfindlichen, von der Gamasche geschützten Partien des Beins gewährleistet.

Weiter gesteigert werden kann der Tragekomfort einer erfindungsgemäßen Gamasche dadurch, daß der Mittelabschnitt der harten Außenschale an seinem im am Bein des Pferdes befestigten Zustand unteren Randbereich eine Ausnehmung aufweist, in der im am Bein befestigten Zustand der im Bereich des Fesselgelenk des Pferdes ausgebildete Sporn (Gleichbein) angeordnet ist. Auf diese Weise wird vermieden, daß es infolge eines direkten Kontakts des Sporns mit der schützenden Außenschale der Gamasche auf Dauer zu für das Pferd besonders schmerzhaften Verletzungen kommt.

Weitere vorteilhafte Ausgestaltungen der Erfindung sind in den abhängigen Ansprüche angegeben und werden im Zusammenhang mit dem nachfolgend anhand einer Zeichnung beschriebenen Ausführungsbeispiel näher erläutert. Es zeigen:

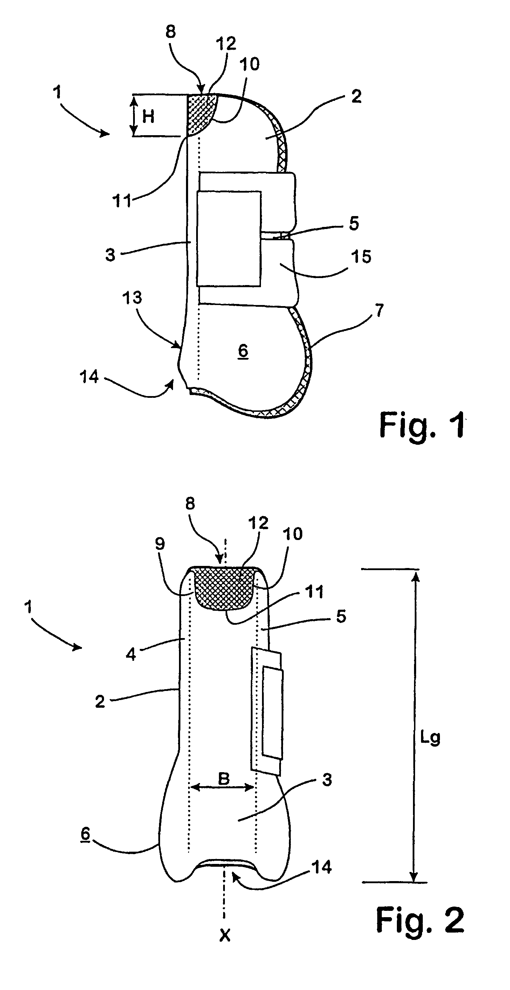

- Fig. 1: eine Gamasche für das Vorderbein eines Springpferds in einer Ansicht von einer ersten Seite,
- Fig. 2: die Gamasche in einer Ansicht von hinten,
- Fig. 3: die Gamasche im am Vorderbein des Pferdes angelegten Zustand in einer Ansicht von der zweiten, der ersten Seite gegenüberliegenden Seite.

Die Gamasche 1 weist eine in ihrer Grundform an die Form des zu schützenden Abschnitts des Vorderbeins V angepaßte Außenschale 2 aus einem harten, vorzugsweise aus TPE (Thermoplastisches Ethylen), gefertigten Material auf. Die Außenschale 2 besitzt dabei einen mittleren, sich in längs des Vorderbeins V des weiter nicht dargestellten Pferdes erstreckenden Mittelabschnitt 3, an den sich seitlich jeweils ein Seitenabschnitt 4,5 anschließt. In ihrem unteren, dem Fesselgelenk F des Vorderbeins V zugeordneten Bereich 6 ist die Außenschale 2 nach außen gewölbt ausgebildet, so daß sie in diesem Bereich 6 an die natürliche Form des Fesselgelenks F angepaßt ist. Auf ihrer Innenseite ist die Außenschale 2 mit einem Futter 7 belegt, das aus weichem Polsterstoff, beispielsweise Neoprene, besteht. Das Futter 7 steht dabei über Räder der Außenschale 2 über, so daß Scheuern der Haut des Pferdes an den harten Randkanten der Außenschale 2 sicher vermieden wird.

Im am Vorderbein V angelegten Zustand oberen Randbereich des Mittelabschnitts 3 der Außenschale 2 ist eine Ausnehmung 8 ausgebildet. Die Höhe H dieser Ausnehmung 8 entspricht etwa dem 0,125-fachen der Gesamtlänge Lg der Gamasche 1. Gleichzeitig erstreckt sich die Ausnehmung 8 über die Breite B des Mittelabschnitts 3 bis in die seitlichen Abschnitte 4,5. Dabei sind die Übergänge zwischen den schräg in Richtung der Vorderseite des Vorderbeins V verlaufenden seitlichen Randabschnitten 9,10 und dem mittleren Randabschnitt 11 der Ausnehmung 8 abgerundet, so daß ein weicher Übergang zwischen diesen Randabschnitten 9,10 und dem im wesentlichen quer zur Längsachse X der Gamasche 1 sich erstreckenden mittleren Randabschnitt 11 gebildet ist. Der mittlere Randabschnitt 11 weist zusätzlich eine leichte, in Richtung des unteren Abschnitts 6 der Außenschale 2 gerichtete Wölbung auf. Auf diese Weise ist die Form der Ausnehmung 8 optimal an die Gestalt des Vorderbeins V angepaßt, dem die Ausnehmung 8 bei am Vorderbein V angelegter Gamasche 1 jeweils zugeordnet ist.

In die Ausnehmung 8 ist ein nachgiebiges Polstermaterial 12 gespannt, welches beispielsweise aus einem elastischen Netzgewebe und einer auf dessen dem Vorderbein V zugeordneten Seite aufgebrachte weiche, ebenso nachgiebige Polsterung gebildet ist. Der obere, im wesentlichen gerade verlaufende Rand des Polstermaterials 12 ist dabei leicht verdickt ausgeführt, um die Formhaltigkeit des Polstermaterials 12 zu erhöhen, ohne die Nachgiebigkeit des Polstermaterials 12 herabzusetzen.

Schließlich ist der Mittelabschnitt 3 an seinem im am Vorderbein V des Pferdes befestigten Zustand unteren Randbereich 13 ebenfalls mit einer Ausnehmung 14 versehen. Diese Ausnehmung 14 ist dabei derart ausgebildet, daß die Außenschale 2 den im Bereich des Fesselgelenk F ausgebildeten, hier nicht sichtbaren Sporns (Gleichbein) umgibt, ohne direkt auf ihm aufzuliegen.

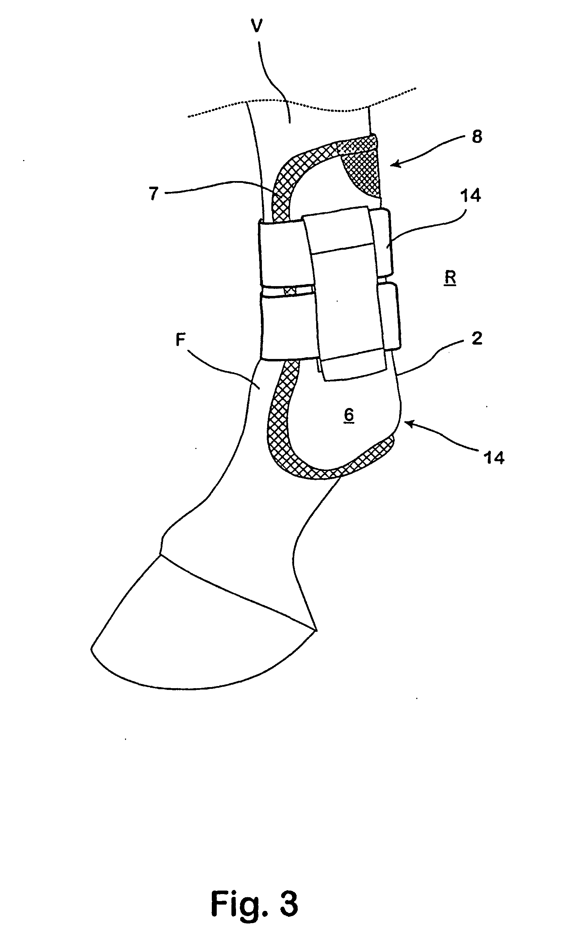

Die Gamasche 1 wird von hinten so um das Vorderbein V gelegt, daß der ausgewölbte Bereich 6 der Außenschale 2 das Fesselgelenk F seitlich abdeckt und der Sporn in der Ausnehmung 14 sitzt. Anschließend werden die beiden Bänder eines üblicherweise für diesen Zweck verwendeten Klettverschlusses 15 von der einen Seite der Gamasche 1 um das Vorderbein V gelegt und mit dem Klettband verhakt, welches auf der anderen Seite der Gamasche 1 befestigt ist. In dieser Stellung (Fig. 3) ist die Behinderung der Beweglichkeit des auf der Rückseite R des Vorderbeins V verlaufenden Sehnen und Muskeln auf ein Minimum reduziert, so daß auch bei langen Tragezeiten und hoher Belastung infolge von Scheuern andernfalls eintretende Verletzungen der Haut des Pferdes im Bereich der Gamasche 1 sicher vermieden werden.

### BEZUGSZEICHEN

- 1: Gamasche
- 2: Außenschale
- 3: Mittelabschnitt
- 4,5: Seitenabschnitt
- 6: ausgewölbter Bereich der Außenschale 2
- 7: Futter
- 8: Ausnehmung
- 9,10: Randabschnitten der Ausnehmung 8
- 11: mittlerer Randabschnitt der Ausnehmung 8
- 12: Polstermaterial
- 13: unterer Randbereich der Außenschale 2
- 14: Ausnehmung
- 15: Klettverschluß

- B: Breite des Mittelabschnitts 3
- F: Fesselgelenk des Vorderbeins V
- H: Höhe der Ausnehmung 8
- Lg: Gesamtlänge
- R: Rückseite
- V: Vorderbein
- X: Längsachse

## Patentansprüche

1. Gamasche zum Schutz eines Beines eines Pferds, insbesondere zum Schutz von Sehnen, Bändern, Gleichbein und Fesselgelenk (F) der hinteren Partie der Vorderbeine (V) von Springpferden, mit einer Außenschale (2) aus einem formsteifen Material, die einen der Rückseite (R) des jeweiligen Beins (V) zugeordneten, sich längs des Beins (V) erstreckenden Mittelabschnitt (3) aufweist, **dadurch gekennzeichnet, daß** der Mittelabschnitt (3) der Außenschale (2) in seinem im am Bein (V) des Pferdes befestigten zustand oberen Randbereich eine Ausnehmung (8) aufweist, die mit einem nachgiebigen Polstermaterial (12) gefüllt ist.

2. Gamasche nach Anspruch 1, **dadurch gekennzeichnet, daß** an mindestens eine der Seiten des Mittelabschnitts (3) der Außenschale (2) ein Seitenabschnitt (4,5) angeschlossen ist.

3. Gamasche nach Anspruch 2, **dadurch gekennzeichnet, daß** sich die Ausnehmung (8) bis in den Seitenabschnitt (4,5) der Außenschale (2) erstreckt.

4. Gamasche nach einem der voranstehenden Ansprüche, **dadurch gekennzeichnet, daß** die Ausnehmung (8) einen im wesentlichen quer zur Längsachse (X) der Gamasche (1) sich erstreckenden mittleren Randabschnitt (11) aufweist, der über seitliche, sich längs der Gamasche (1) erstreckende Randabschnitte (9,10) mit dem oberen Rand der Außenschale (2) verbunden ist.

5. Gamasche nach Anspruch 4, **dadurch gekennzeichnet, daß** der mittlere Randabschnitt (12) einen in Richtung des unteren Randes der Außenschale gewölbten Verlauf aufweist.

6. Gamasche nach Anspruch 4 oder 5, **dadurch gekennzeichnet, daß** der Übergang von den seitlichen Randabschnitten (9,10) zu dem mittleren Randabschnitt (11) abgerundet ausgeführt ist.

7. Gamasche nach einem der Ansprüche 4 bis 6, **dadurch gekennzeichnet, daß** die seitlichen Randabschnitte (9,10) schräg von dem mittleren Randabschnitt weggeführt sind.

8. Gamasche nach einem der voranstehenden Ansprüche, **dadurch gekennzeichnet, daß** die in Richtung der Längserstreckung der Gamasche gemessene Höhe (H) der Ausnehmung (8) einem Siebtel bis einem Neuntel der Gesamthöhe der Außenschale (2) entspricht.

9. Gamasche nach einem der voranstehenden Ansprüche, **dadurch gekennzeichnet, daß** der Mittelabschnitt (3) an seinem im am Bein (V) des Pferdes befestigten Zustand unteren Randbereich (13) eine Ausnehmung (14) aufweist, in der im am Bein (V) befestigten Zustand der im Bereich des Fesselgelenk des Pferdes ausgebildete Sporns (Gleichbein) angeordnet ist.

10. Gamasche nach einem der voranstehenden Ansprüche, **dadurch gekennzeichnet, daß** die Außenschale (2) in ihrem am Bein des Pferdes befestigten Zustand unteren Bereich (6) ausgewölbt ist.

11. Gamasche nach einem der voranstehenden Ansprüche, **dadurch gekennzeichnet, daß** die Außenschale (2) auf ihrer am Bein anliegenden Innenseite mit einem Futter (7) aus einem weichen Polstermaterial belegt ist.

## Claims

1. A legging for protecting the leg of a horse, especially for protecting sinews, ligaments, sesamoid bone and fetlock joint (F) of the rear part of the front legs (V) of jumpers, with an outer shell (2) of rigid material, which has a middle section (3) corresponding to the rear part (R) of the respective leg (V) and extending along the leg (V), **characterised in that** the middle section (3) of the outer shell (2), at its upper edge area when fastened to the leg (V) of the horse, has a cut-away (8) which is filled with a pliable padding material (12).

2. The legging according to claim 1, **characterised in that** a lateral section (4, 5) is attached to at least one of the sides of the middle section (3) of the outer shell (2).

3. The legging according to claim 2, **characterised in that** the cut-away (8) extends into the lateral section (4, 5) of the outer shell (2).

4. The legging according to one of the preceding claims, **characterised in that** the cut-away (8) has a middle edge section (11) essentially extending transverse to the longitudinal axis (X) of the legging (1), said edge section being joined to the upper edge of the outer shell (2) via lateral edge sections (9, 10) extending along the legging (1).

5. The legging according to claim 4, **characterised in that** the middle edge section (12) has a shape domed in the direction of the lower edge of the outer shell.

6. The legging according to claim 4 or 5, **characterised in that** the transition from the lateral edge sections (9, 10) to the middle edge section (11) is executed in a rounded shape.

7. The legging according to claims 4 to 6, **characterised in that** the lateral edge sections (9, 10) lead away from the middle edge section obliquely.

8. The legging according to one of the preceding claims, **characterised in that** the height (H) of the cut-away (8) measured in the direction of the longitudinal extension of the legging, is equivalent to one seventh to one ninth of the overall height of the outer shell (2).

9. The legging according to one of the preceding claims, **characterised in that** the middle section (3), as attached to the leg (V) of the horse, in its lower edge area (13) has a cut-away (14) in which, when attached to the leg (V), the spur (sesamoid bone) is located which is present in the area of the fetlock joint of the horse.

10. The legging according to one of the preceding claims, **characterised in that** the outer shell (2), as fitted to the leg of the horse, is domed in the lower area (6).

11. The legging according to one of the preceding claims, **characterised in that** the outer shell (2) on its inner side, being in contact with the leg, is covered with a lining (7) of soft padding material.

## Revendications

1. Guêtre pour protéger une jambe d'un cheval, notamment pour protéger des tendons, des ligaments, l'os crochu et le boulet (F) de la partie arrière de jambes de devant (V) de chevaux d'obstacles, comportant une coque extérieure (2) formée d'un matériau de forme rigide, qui possède une partie médiane (3) qui est associée au côté arrière (R) de la jambe respective (V) et s'étend le long de la jambe (V), **caractérisée en ce que** la section médiane (3) de la coque extérieure (2) comporte, dans sa zone marginale supérieure, dans l'état où elle est fixée sur la jambe (V) du cheval, un évidement (8), qui est rempli par un matériau de rembourrage flexible (12).

2. Guêtre selon la revendication 1, **caractérisée en ce qu'**une partie latérale (4, 5) est raccordée à au moins l'un des côtés de la partie médiane (3) de la coque extérieure (2).

3. Guêtre selon la revendication 2, **caractérisée en ce que** l'évidement (8) s'étend jusque dans la partie latérale (4, 5) de la coque extérieure (2).

4. Guêtre selon l'une des revendications précédentes, **caractérisée en ce que** l'évidement (8) comporte une partie médiane marginale (11) qui s'étend essentiellement transversalement par rapport à l'axe longitudinal (X) de la guêtre (1) et est reliée au bord supérieur de la coque extérieure (2) par l'intermédiaire de parties marginales latérales (9, 10), qui s'étendent le long de la guêtre (1).

5. Guêtre selon la revendication 4, **caractérisée en ce que** la partie marginale médiane (12) possède une forme cintrée en direction du bord inférieur de la coque extérieure.

6. Guêtre selon la revendication 4 ou 5, **caractérisée en ce que** la jonction des parties marginales latérales (9, 10) avec la partie marginale médiane (11) est agencée avec une forme arrondie.

7. Guêtre selon l'une des revendications 4 à 6, **caractérisée en ce que** les parties marginales latérales (9, 10) s'étendent obliquement à partir de la partie longitudinale médiane.

8. Guêtre selon l'une des revendications précédentes, **caractérisée en ce que** la hauteur (H) de l'évidement (8), mesurée dans la direction de l'étendue longitudinale de la guêtre, correspond à une valeur comprise entre un septième et un neuvième de la hauteur totale de la coque extérieure (2).

9. Guêtre selon l'une des revendications précédentes, **caractérisée en ce que** la partie médiane (3) comporte, au niveau de la partie marginale inférieure (13) dans l'état fixé sur la jambe (V) du cheval, un évidement (14), dans lequel est disposé, dans l'état fixé sur la jambe (V), l'ergot (l'os grand sésamoïde) formé dans la zone de l'articulation du boulet du cheval.

10. Guêtre selon l'une des revendications précédentes, **caractérisée en ce que** la coque extérieure (2) est cintrée dans sa partie (6) qui est inférieure dans l'état où la coque est fixée à la jambe du cheval.

11. Guêtre selon l'une des revendications précédentes, **caractérisée en ce que** la coque extérieure (2) est garnie, au niveau de son côté intérieur appliqué contre la jambe, d'une doublure (7) formée d'un matériau de rembourrage mou.
